# EUROPÄISCHE PATENTSCHRIFT

(11) **EP 1 085 224 B1**
(45) Veröffentlichungstag und Bekanntmachung des Hinweises auf die Patenterteilung: **06.07.2005**
(21) Anmeldenummer: 00119038.8
(22) Anmeldetag: 02.09.2000
(51) Int. Cl.: F16C 39/06

(54) **Rotor mit Magnetlagerung**
Rotor with magnetic bearing
Rotor avec palier magnétique

(30) Priorität: 13.09.1999 DE 19943682
(43) Veröffentlichungstag der Anmeldung: 21.03.2001
(73) Patentinhaber: Pfeiffer Vacuum GmbH, 35614 Asslar (DE)
(72) Erfinder: Bernhardt, Helmut, 35584 Wetzlar (DE)

(56) Entgegenhaltungen:
- DE-A- 2 524 061
- DE-A- 4 210 042
- DE-C- 19 608 099
- US-A- 4 629 261
- US-A- 5 126 610
- US-A- 5 394 044

## Beschreibung

Die Erfindung betrifft ein Verfahren zum Betrieb eines Rotors mit Magnetlagerung nach dem Oberbegriff des 1. Patentanspruches.

Rotoren, welche durch ein magnetisches Lagersystem berührungslos abgestützt und zentriert werden, sind in der Regel zusätzlich mit einem Hilfslagersystem ausgestattet. Dieses dient zum einen als Stützlager für den Fall, daß das Magnetlager nicht in Betrieb ist, und zum anderen als Hilfslager im Falle einer Störung im Magnetlager oder eines Ausfalls desselben. Es können aber auch Störungen von außen Kräfte auf den Rotor bewirken, die durch das Magnetlager nicht abgefangen werden können. Dann kommt es leicht zum Anlaufen am Stator und folglich zur Beschädigung oder gar zur Zerstörung der Anordnung. Das Hilfslagersystem kann den Rotor in solchen Fällen stützen und bis zum Auslaufen in einer sicheren Position halten.

Solche Hilfslagersysteme bestehen in der Regel aus mechanischen Elementen wie Wälz- oder Gleitlager, die radial und/oder axial in geringem Abstand von Rotor und Stator befestigt sind und im Falle der oben genannten Störungen wirksam werden.

Durch Reibung zwischen Rotor und Hilfslager bzw. zwischen Hilfslager und Stator wird die Entstehung von Eigenbewegungen, wie z. B. exzentrisches Umlaufen des Rotors, begünstigt, aus denen sich Zentrifugalkräfte entwickeln können, die den Rotor nicht mehr freilassen. Dabei kann es zu Durchbiegungen kommen, die im Extremfall zu Zerstörungen führen können. Die bei einem solchen Vorgang entstehenden Zentrifugalkräfte sind vielfach höher als die Kräfte, die mit einem für normalen Magnetlagerbetrieb ausgelegten Lagern erzeugt werden können.

Mit Hilfe von herkömmlichen Hilfslagern kann man die Energie des Rotors aufnehmen und diesen dadurch abbremsen. Bei vergleichsweise sehr niedrigen Drehzahlen sind die Zentrifugalkräfte soweit reduziert, daß das Magnetlager dann in der Lage ist, den Rotor wieder in der gewünschten Position zu stabilisieren. In diesen Hilfslagern tritt jedoch ein großer Verschleiß auf, so daß diese schnell erneuert werden müssen. Außerdem ist oft ein solches Abbremsen auf tiefe Dehzahlen unerwünscht oder gar unzulässig. In vielen Fällen möchte man lediglich die störenden Bewegungen beseitigen und den Rotor beruhigen, ohne daß die Drehzahl zu sehr absinkt und der mit der Rotoranordnung bewirkte Prozeß, z. B. das Evakuieren eines Rezipienten, merklich unterbrochen wird.

Es gibt aufwendige Hilfslagersysteme, z. B. DE-OS 4210042, welche die Entstehung zerstörend wirkender Eigenbewegungen des Rotors verhindern. Diese sind jedoch mechanisch kompliziert und mit hohen Herstellkosten verbunden.

Der Erfindung liegt die Aufgabe zugrunde, ein Verfahren zu entwickeln, mit dem ein magnetisch gelagerter Rotor bei Störungen beruhigt und wieder in ordnungsgemässen Betrieb überführt werden kann, ohne daß seine Drehzahl sich wesentlich verringert. Das Verfahren soll mit einfachen Mitteln verwirklicht werden können, wobei die oben beschriebenen Nachteile zu vermeiden sind.

Die Aufgabe wird durch die gegenüber der US-A-4 629 261 kennzeichnenden Merkmale des 1. Patentanspruches gelöst. Die Ansprüche 2 - 9 stellen weitere Ausgestaltungsformen der Erfindung dar.

Durch das erfindungsgemäße Verfahren können Störungen bei einem Rotor mit Magnetlagerung unter Kontrolle gehalten und beruhigt werden, ohne daß dessen Drehzahl sich wesentlich verringert. Ein tiefes, mit mehreren Nachteilen behaftetes Absenken der Drehzahl, wie es bei herkömmlichen Hilfslagersystemen nötig ist, findet nicht statt. Das Verfahren wird weitgehend mit den ohnehin vorhandenen Mitteln durchgeführt, so daß der konstruktive und finanzielle Aufwand auf ein Minimum beschränkt bleibt. Dies gilt besonders in den Fällen, in denen entsprechend Anspruch 5 ein aktiv geregeltes axiales Magnetlager vorhanden ist.

Durch die axiale Berührung der Reibungsflächen werden radiale Bewegungen gedämpft und beseitigt. Nach Beruhigung des Rotors werden die Reibungsflächen wieder getrennt, und der Rotor kann, ohne daß seine Drehzahl merklich abgesunken ist, nach kurzer Zeit wieder mit voller Drehzahl weiter laufen.

Das in Anspruch 2 beschriebene Verfahren, mit dem die Reibungsfläche des jeweils nicht fixierten Ringes des Hilfslagersystems mit der zugehörigen gegenüberstehenden Reibungsfläche in Berührung gebracht wird, ermöglicht ein Dämpfen von radialen Bewegungen, ohne daß die Rotationsbewegung durch Reibung merklich abgebremst wird. Das Verfahren bewirkt somit, daß auf exzentrische Rotorbewegungen hohe Reibungskräfte und auf Drehbewegungen des Rotors minimale Reibungskräfte einwirken.

Dies gilt für die in den Ansprüchen 3 und 4 genannten Fälle, bei denen ein Ring des Kugellagers entweder auf dem Rotor oder auf dem Stator fixiert ist.

Mit einem aktiv geregelten axialen Magnetlager können, wie in Anspruch 5 beschrieben, die Reibungsflächen in Berührung gebracht werden, indem der Rotor durch die aktive Regelung in Richtung Stator bewegt wird. Ebenso kann nach Anspruch 6 eine Antriebsvorrichtung vorhanden sein, welche die Statorbauteile des Hilfslagersystems in Richtung Rotor bewegt und so die Reibungsflächen zur Berührung bringt.

Nachdem durch das erfindungsgemäße Verfahren der Rotor wieder beruhigt wurde, wird nach Anspruch 7 die Berührung der Reibungsflächen gelöst und der Rotor wieder auf Drehzahl gebracht. Damit wird verhindert, daß durch weitere unnötig Reibungsverluste die Drehzahl zu weit absinkt.

Durch eine konische Ausbildung der Reibungsflächen, wie in Anspruch 9 erwähnt, wird erreicht, daß der Rotor nach Beruhigung sich gleich wieder in zentraler Lage befindet. Dagegen wird bei der Standardausführung, wie in Anspruch 8 erwähnt, der Rotor nach Beruhigung in der Regel aus einer dezentralen Lage erst wieder durch das radiale Magnetlager zentriert werden müssen.

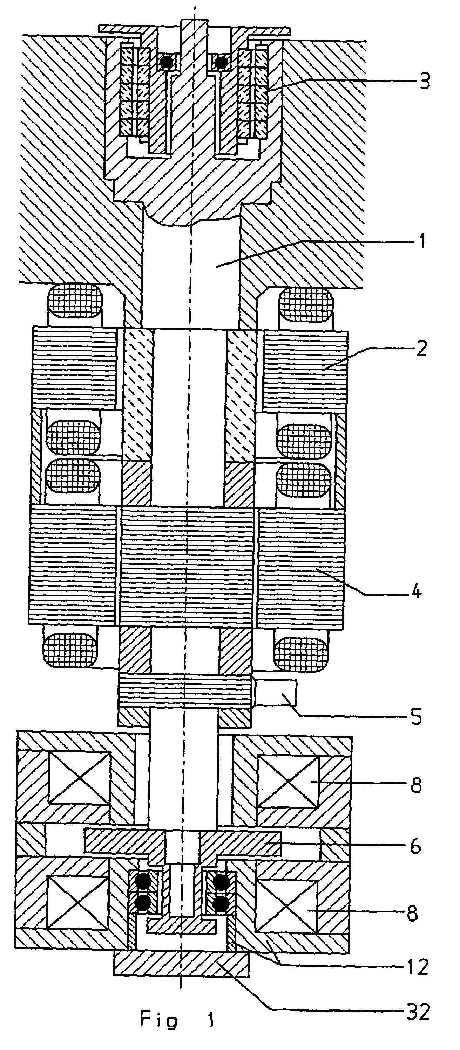

An Hand der Figuren 1 bis 4 soll die Erfindung an einem Beispiel näher beschrieben werden.

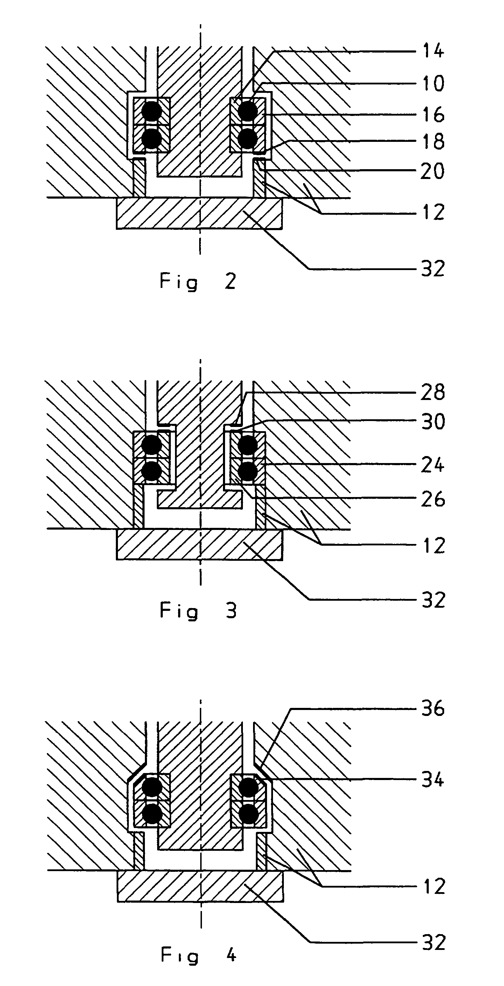

Es zeigen Fig. 1 einen Rotor mit Magnetlager und Hilfslagersystem, Fig. 2 einen vergrößerten Ausschnitt des Hilfslagersystems aus Fig. 1, Fig. 3 und Fig. 4 weitere Ausgestaltungsformen des Hilfslagersystems.

In Fig. 1 und in vergrößerter Darstellung des Hilfslagersystems in Fig. 2 ist ein Rotor 1 mit einem Antriebssystem 2 dargestellt. Die Magnetlagerung besteht im vorliegenden Beispiel aus einem passiven radialen Magnetlagersystem 3, einem aktiven Magnetlagersystem 4 mit Sensor 5 und aus einer aktiven axialen Magnetlagerung mit einer rotorseitigen axialen Lagerscheibe 6 sowie axialen Elektromagneten 8 auf der Statorseite. Zu dem Hilfslagersystem gehören ein auf dem Rotor befestigtes Kugellager 10 und mehrere eine Nut bildende Statorteile 12. Gemäß Figur 2 ist das Kugellager 10 ist mit seinem Innenring 14 am Rotor befestigt, so daß der Innenring in diesem Beispiel als fixierter Ring dient. Der Außenring 16 als nicht fixierter Ring ist auf einer Stirnfläche mit einer Reibungsfläche 18 versehen. Zu dieser gehört eine gegenüberstehende Reibungsfläche 20, welche sich auf dem Statorteil 12 befindet In Abwandlung dieser Konstruktion kann auch der Außenring des Kugellagers als fixierter Ring auf dem Rotor angebracht sein und der Innenring als nicht fixierter Ring dienen, siehe Figuren 1 und 3.

Im Falle einer Störung, welche eine radiale Bewegung des Rotors 1 verursacht, wird der Rotor durch den Elektormagneten 8 der aktiven axialen Magnetlagerung in seiner axialen Richtung so bewegt, daß die Reibungsflächen 18 und 20 zur Berührung kommen und mit einer definierten Kraft gegeneinander gedrückt werden. Dadurch wird die radiale Bewegung des Rotors gedämpft, ohne daß die Rotationsbewegung wesentlich abgebremst wird. Auf sie wirkt die Bremsung des nicht fixierten Ringes lediglich über die geringe Reibung zwischen den beiden Kugellagerringen. Ist die radiale Bewegung des Rotors so weit gedämft, daß dieser einen ruhigen Lauf aufweist, wird die Berührung der Reibungsflächen wieder gelöst, indem der Rotor durch den axialen Elektromagneten 8 in die entgegengesetzte Richtung bewegt wird. Zum Nachweis der Beruhigung der radialen Rotorbewegung können vorteilhafterweise die ohnehin vorhandenen Sensoren 5 eines aktiven Radiallagers 4 verwendet werden.

Bei einer Anordnung, welche kein geregeltes Axiallager aufweist, kann die Statoranordnung durch eine Antriebsanordnung 32 in axialer Richtung relativ zum Rotor so verschoben werden, daß die oben beschriebenen Vorgänge ablaufen.

In Fig. 3 ist ein Ausführungsbeispiel dargestellt, bei dem der fixierte Ring 24 des Kugellagers mit dem Statorteil verbunden ist und die der Reibungsfläche 30 des nicht fixierten Ringes 26 gegenüberstehende Reibungsfläche 28 sich auf dem Rotor befindet.

Entsprechend dem vorangegangenen Beispiel kann hier der Innenring des Kugellagers als fixierter Ring mit dem Statorteil verbunden sein und der Außenring als nicht fixierter Ring dienen.

Bei allen Ausführungsbeispielen spielen sich bei einer Störung die Vorgänge entsprechend den oben beschriebenen ab, bis der Rotor beruhigt ist und die Berührung der Reibungsflächen wieder gelöst werden kann.

Eine weitere Ausführungsform ist in Fig. 4 dargestellt. Hier sind die Reibungsfläche 34 des nicht fixierten Ringes des Kugellagers und die zugehörige gegenüberliegende Reibungsfläche 36 konisch ausgebildet. Dadurch wird erreicht, daß sich der Rotor nach Beruhigung wieder in zentraler Lage befindet. Diese Variante kann entsprechend auf alle vorher beschriebenen Ausführungsformen angewandt werden.

## Patentansprüche

1. "Verfahren zum Betrieb eines Rotors (1) mit Magnetlagerung (3, 4), wobei diese mit einem Hilfslagersystem (6, 8) ausgestattet ist, bestehend aus Rotor- (10) und Statorbauteilen (12), versehen mit rotor- und statorseitigen Reibungsflächen (18, 20, 28, 30, 34, 36), die sich wenigstens axial gegenüberstehen und bei störungsbedingten Auslenkungen des Rotors einander berühren, wobei im Falle einer Störung, welche eine radiale Bewegung des Rotors verursacht, die mindestens axialen Reibungsflächen zur Berührung gebracht werden, **dadurch gekennzeichnet, dass** bei Aufrechterhaltung der Magnetlagerung die störende radiale Bewegung des Rotors durch gezielt befristet aufgebrachte Reibung zwischen den axialen Reibungsflächen gedämpft und schließlich beseitigt wird.

2. Verfahren nach Anspruch 1, **dadurch gekennzeichnet, daß** das Hilfslagersystem mindestens ein Kugellager mit einem fixierten (14, 24) und einem nicht fixierten Ring (16, 26) aufweist, wobei der nicht fixierte Ring mit der axialen Reibungsfläche (18, 30, 34) versehen ist, welche mit der dazugehörigen gegenüberstehenden Reibungsfläche (20, 28, 36) in Berührung gebracht wird.

3. Verfahren nach Anspruch 2, **dadurch gekennzeichnet, daß** der fixierte Ring (14) des Kugellagers mit dem Rotor (1) und die dem nicht fixierten Ring gegenüberstehende Reibungsfläche (20) mit dem Stator (12) verbunden ist.

4. Verfahren nach Anspruch 2, **dadurch gekennzeichnet, daß** der fixierte Ring (24) des Kugellagers mit dem Stator (12) und die dem nicht fixierten Ring gegenüberstehende Reibungsfläche (28) mit dem Rotor (1) verbunden ist.

5. Verfahren nach einem der vorangehenden Ansprüche, **dadurch gekennzeichnet, daß** die Magnetlagerung mindestens aus einem aktiv geregelten axialen Magnetlager (6,8) besteht und daß der Rotor (1) durch dieses in Richtung Stator (12) bewegt wird, bis sich die axialen Reibungsflächen (18, 20, 28, 30, 34, 36) des Hilfslagersystems berühren und mit einer definierten Kraft gegeneinander gedrückt werden.

6. Verfahren nach einem der Ansprüche 1 - 4, **dadurch gekennzeichnet, daß** der Stator (12) des Hilfslagersystems durch eine Antriebseinrichtung (32) in Richtung Rotor (1) bewegt wird, bis sich die axialen Reibungsflächen (18, 20, 28, 30, 34, 36) des Hilfslagersystems berühren und mit einer definierten Kraft gegeneinander gedrückt werden.

7. Verfahren nach einem der Ansprüche 1 - 6, **dadurch gekennzeichnet, daß** die axialen Reibungsflächen (18, 20, 28, 30) senkrecht zur Rotorachse angeordnet sind.

8. Verfahren nach einem der Ansprüche 1 - 6, **dadurch gekennzeichnet, daß** die axialen Reibungsflächen (34, 36) konische Formen aufweisen.

## Claims

1. Method of operating a rotor (1) with a magnetic bearing arrangement (3, 4), wherein said magnetic bearing arrangement is equipped with an auxiliary bearing system (6, 8), comprising rotor- (10) and stator components (12), provided with rotor-side and stator-side friction surfaces (18, 20, 28, 30, 34, 36), which lie at least axially opposite one another and in the event of fault-related deflections of the rotor touch one another, wherein, in the event of a disturbance that causes a radial movement of the rotor, the at least axial friction surfaces are brought into contact, **characterized in that**, while simultaneously maintaining the magnetic bearing arrangement, the disturbing radial movement of the rotor is damped and finally eliminated by purposefully temporarily applied friction between the axial friction surfaces.

2. Method according to claim 1, **characterized in that** the auxiliary bearing system comprises at least one ball bearing having a fixed raceway (14, 25) and a non-fixed raceway (16, 26), wherein the non-fixed raceway is provided with the axial friction surface (18, 30, 34) that is brought into contact with the associated opposite friction surface (20, 28, 36).

3. Method according to claim 2, **characterized in that** the fixed raceway (14) of the ball bearing is connected to the rotor (1) and the friction surface (20) opposite the non-fixed raceway is connected to the stator (12).

4. Method according to claim 2, **characterized in that** the fixed raceway (24) of the ball bearing is connected to the stator (12) and the friction surface (28) opposite the non-fixed raceway is connected to the rotor (1).

5. Method according to one of the preceding claims, **characterized in that** the magnetic bearing arrangement at least comprises an actively controlled axial magnetic bearing (6, 8) and that the rotor (1) is moved by said magnetic bearing in the direction of the stator (12) until the axial friction surfaces (18, 20, 28, 30, 34, 36) of the auxiliary bearing system touch one another and are pressed with a defined force against one another.

6. Method according to one of claims 1 - 4, **characterized in that** the stator (12) of the auxiliary bearing system is moved by a driving device (32) in the direction of the rotor (1) until the axial friction surfaces (18, 20, 28, 30, 34, 36) of the auxiliary bearing system touch one another and are pressed with a defined force against one another.

7. Method according to one of claims 1 - 6, **characterized in that** the axial friction surfaces (18, 20, 28, 30) are disposed at right angles to the rotor axis.

8. Method according to one of claims 1 - 6, **characterized in that** the axial friction surfaces (34, 36) have conical shapes.

## Revendications

1. Procédé de mise en oeuvre d'un rotor (1) à logement magnétique (3, 4) dans lequel ce dernier est équipé d'un système (6, 8) de palier de secours, qui est constitué de composants de rotor (1) et de stator (12) comportant, sur les côtés rotor et stator, des surfaces de friction (18, 20, 28, 30, 34, 36) qui se font face au moins axialement et viennent en contact mutuel lors d'excursions du rotor provoquées par des perturbations, dans lequel au moins les surfaces de friction axiales viennent en contact entre elles dans le cas d'une perturbation qui provoque un déplacement radial du rotor, **caractérisé en ce que** le déplacement radial perturbateur du rotor est atténué et finalement éliminé, en préservant le palier magnétique, par une friction appliquée temporairement de façon ciblée entre les surface de friction axiales.

2. Procédé selon la revendication 1, **caractérisé en ce que** le système de palier de secours comprend au moins un palier à billes, incluant une bague fixée (14, 24) et une bague non fixée (16, 26), dans lequel la bague non fixée comporte la surface de friction axiale (18, 30, 34) qui est amenée en contact avec la surface d'appui opposée (20, 28, 36) qui lui est associée.

3. Procédé selon la revendication 2, **caractérisé en ce que** la bague fixée (14) du palier à billes est connectée au rotor (1) et **en ce que** la surface de friction (20) opposée à la bague non fixée est connectée au stator (12).

4. Procédé selon la revendication 2, **caractérisé en ce que** la bague fixée (24) du palier à billes est connectée au stator (12) et **en ce que** la surface de friction (28) opposée à la bague non fixée est connectée au rotor (1).

5. Procédé selon l'une quelconque des revendications précédentes, **caractérisé en ce que** le logement magnétique se compose d'au moins un palier magnétique axial régulé activement (6, 8) et **en ce que** le rotor (1) est déplacé par ce palier en direction du stator (12) jusqu'à ce que les surfaces de friction axiales (18, 20, 28, 30, 34, 36) du système de palier de secours soient en contact et soient appuyées l'une contre l'autre selon une force définie.

6. Procédé selon l'une quelconque des revendications 1 à 4, **caractérisé en ce que** le stator (12) du système de palier de secours est déplacé en direction du rotor par un dispositif d'entraînement (32) jusqu'à ce que les surfaces de friction axiales (18, 20, 28, 30, 34, 36) du système de palier de secours soient en contact et soient appuyées l'une contre l'autre selon une force définie.

7. Procédé selon l'une quelconque des revendications précédentes, **caractérisé en ce que** les surfaces de friction axiales (18, 20, 28, 30) sont disposées perpendiculairement à l'axe de rotor.

8. Procédé selon l'une quelconque des revendications 1 à 6, **caractérisé en ce que** les surfaces de friction axiales (34, 36) sont de forme conique.
